# EUROPÄISCHE PATENTANMELDUNG

(11) **EP 0 680 011 A1**
(43) Veröffentlichungstag der Anmeldung: **02.11.1995**
(21) Anmeldenummer: 93116912.2
(22) Anmeldetag: 20.10.1993
(51) Int. Cl.: G06K 19/02, G08B 13/24

(54) **Verfahren zur Herstellung von Sicherheitsetiketten**

(30) Priorität: 12.11.1992 DE 4238145
(71) Anmelder: ESSELTE METO INTERNATIONAL PRODUKTIONS GMBH, D-69434 Hirschhorn (DE)
(72) Erfinder: Kalus, Peter, D-69151 Neckargemünd (DE); Knecht, Georg, D-69434 Hirschhorn (DE); Schmitt, Walter, D-69434 Heddesbach (DE); Pfohe, Gerhard, D-69434 Langenthal (DE)

(57) **Zusammenfassung**

Zur Herstellung qualitativ hochwertiger und fehlerfrei arbeitender Etiketten wird auf eine Trägerfolie (1) ein hartmagnetischer Metallstreifen (5) aufgeklebt, wird auf den hartmagnetischen Metallstreifen (5) eine Siliconpapierschicht (6) aufgebracht, wird die Trägerfolie (1) mit dem Metallstreifen (5) und der Siliconpapierschicht (6) einer Lochstanze (7) zugeführt, die hieraus im Bereich des Metallstreifens (5) in regelmäßigen Abständen Löcher herausstanzt, wird die Siliconpapierschicht (6) von der Trägerfolie (1) abgezogen, wird auf den hartmagnetischen und mit Lücken versehenen Metallstreifen (5) ein durchgehendes, weichmagnetisches Metallband (9) aufgeklebt, wird auf mindestens eine Seite des aus der Trägerfolie (1), dem Metallstreifen (5) und dem Metallband (9) bestehenden Ausgangsmateriales (10) Abdeckfolie (12,13) aufgebracht und werden aus dem mit Abdeckfolie (12,13) versehenen Ausgangsmaterial (10) Etiketten (14) gestanzt.

## Beschreibung

Die Erfindung bezieht sich auf ein Verfahren zur Herstellung von Sicherheitsetiketten, bei dem auf eine Trägerfolie ein hartmagnetischer Metallstreifen, ein weichmagnetisches Metallband und eine Abdeckfolie aufgebracht werden.

Ein Verfahren zur Herstellung von Sicherheitsetiketten der eingangs erwähnten Art ist aus der DE-OS 32 44 430 bekannt. Hierbei wird auf ein Trägerband ein hartmagnetisches Bandmaterial aufgeklebt, indem das Trägerband von einer taktweise arbeitenden Vorschubeinrichtung in jeweils einstellbarer Länge von einer Vorratsrolle abgezogen wird. Gleichzeitig wird von einer Mehrzahl von Vorratsrollen ebenfalls taktweise eine Mehrzahl endloser Bänder aus hartmagnetischem Material abgezogen und über jeder Vorratsrolle zugeordnete Umlenkmittel derart ausgerichtet, daß die Enden der Bänder parallel zur Ebene des Trägerbandes liegen. Anschließend werden von Schneidemitteln, die den Umlenkmitteln zugeordnet sind, von dem hartmagnetischen Bandmaterial Streifen gleicher Länge abgeschnitten, die dann gleichmäßig miteinander fluchtend auf das Trägerband aufgeklebt werden. In weiteren Verfahrensschritten werden auf das mit dem hartmagnetischen Bandmaterial beklebte Trägerband ein weichmagnetischer Endlosstreifen und ein Deckband aufgebracht. Zur Vermeidung von Herstellungsfehlern ist bei dem aus dem Stand der Technik bekannten Verfahren zur Herstellung von Sicherheitsetiketten darauf zu achten, daß das in Streifen geschnittene hartmagnetische Bandmaterial genau auf die dafür vorgesehenen Stellen des Trägerbandes aufgebracht wird, damit die Abstände zwischen den einzelnen Streifen die für die fehlerfreie Funktion eines Sicherheitsetikettes erforderliche Größe weder über- noch unterschreiten. Sowohl bei zu großen als auch bei zu kleinen Abständen der einzelnen Streifen voneinander kann das darauf liegende weichmagnetische Bandmaterial nicht mehr vollständig deaktiviert werden.

Aufgabe der vorliegenden Erfindung ist es, ein Verfahren zur Herstellung von Sicherheitsetiketten anzugeben, bei dem die beschriebenen Herstellungsfehler vermieden werden.

Diese Aufgabe wird gemäß der Erfindung durch ein Verfahren zur Herstellung von Sicherheitsetiketten gelöst, bei dem
a) auf eine Trägerfolie ein hartmagnetischer Metallstreifen aufgeklebt wird,
b) auf den hartmagnetischen Metallstreifen eine Siliconpapierschicht aufgebracht wird,
c) die Trägerfolie mit dem Metallstreifen und der Siliconpapierschicht einer Lochstanze zugeführt wird, die hieraus im Bereich des Metallstreifens in regelmäßigen Abständen Löcher herausstanzt;
d) die Siliconpapierschicht von der Trägerfolie abgezogen wird,
e) auf den hartmagnetischen und mit Lücken versehenen Metallstreifen ein durchgehendes, weichmagnetisches Metallband aufgeklebt wird,
f) auf mindestens eine Seite des aus der Trägerfolie, dem Metallstreifen und dem Metallband bestehenden Ausgangsmateriales Abdeckfolie aufgebracht wird und
g) aus dem mit Abdeckfolie versehenen Ausgangsmaterial Etiketten gestanzt werden.

Der hartmagnetische Metallstreifen kann hierbei mit einfachen Mitteln auf der Trägerfolie fixiert werden, bevor mit einer Lochstanze an den dafür vorgesehenen Stellen in die Trägerfolie im Bereich des Metallstreifens Löcher identischer Größe gestanzt werden, so daß hierdurch auch die Abstände der durch das Stanzen erzeugten einzelnen Metallstreifenstücke voneinander immer gleich bleiben.

Da die Metallstreifen beim Deaktivieren der Sicherheitsetiketten magnetisiert werden, wodurch das darüberliegende weichmagnetische Metallband in die magnetische Sättigung getrieben wird und von einem elektromagnetischen Wechselfeld nicht mehr ummagnetisiert werden kann, so daß es seinerseits kein Wechselfeld mehr abstrahlen und dadurch einen Diebstahlalarm auslösen kann, müssen die Metallstreifenstücke einen bestimmten Abstand voneinander haben. Ist dieser Abstand zu groß, kann das weichmagnetische Metallband insb. zwischen den hartmagnetischen Metallstreifenstücken nicht mehr vollständig in die Sättigung getrieben werden und bleibt trotz Deaktivierung aktiv. Die Folge hiervon sind für die Kunden peinliche Fehlalarme. Sind die Abstände zwischen den hartmagnetischen Metallstreifenstücken zu klein, ist auch das sich hierzwischen bildende Magnetfeld zu sehr auf den Bereich zwischen den Metallstreifenstücken begrenzt und kann zu wenig in das weichmagnetische Metallband eindringen, um dieses in die Sättigung zu treiben, wodurch sich ebenfalls trotz Deaktivierung peinliche Fehlalarme ergeben. Durch die Verwendung einer Lochstanze zur Erzeugung identischer Abstände zwischen den hartmagnetischen Metallstreifenstücken, ist sichergestellt, daß diese Stücke immmer denselben für eine fehlerfreie Funktion der Etiketten richtigen Abstand voneinander aufweisen.

Preisgünstig herstellbare Sicherheitsetiketten ergeben sich, wenn die Trägerfolie aus mit Silicon beschichtetem Papier und die Abdeckfolie aus zu bedruckendem Etikettenpapier besteht, das auf das Metallband geklebt wird.

Wenn die Trägerfolie aus unbeschichtetem Papier besteht und wenn die Abdeckfolie auf beide Seiten des Ausgangsmaterials aufgebracht wird, wobei die auf das Metallband geklebte Abdeckfolie aus zu bedruckendem Etikettenpapier und die auf die Trägerfolie geklebte Abdeckfolie aus mit Silicon beschichtetem Papier besteht, sind Sicherheitsetiketten herstellbar, die in herkömmlichen Handetikettiergeräten verwendet werden können.

Besonders reißfeste und in Handetikettiergeräten verwendbare Etiketten sind herstellbar, wenn die Trägerfolie aus Kunststoff besteht und wenn die Abdeckfolie auf beide Seiten des Ausgangsmaterials aufgebracht wird, wobei die auf das Metallband geklebte Abdeckfolie aus zu bedruckendem Etikettenpapier und die auf die Trägerfolie geklebte Abdeckfolie aus mit Silicon beschichtetem Papier besteht.

Besteht die Trägerfolie aus Kunststoff und wird die Abdeckfolie auf beide Seiten des Ausgangsmateriales aufgebracht, wobei die auf das Metallband geklebte Abdeckfolie aus Kunststoff und die auf die Trägerfolie geklebte Abdeckfolie aus mit Silicon beschichtetem Papier besteht, ergeben sich nach dem Ablösen der Siliconpapierschicht unbedruckbare Sicherheitsetiketten, die zur Sicherung bestimmter Artikel gegen Diebstahl besonders gut geeignet sind.

Besonders strapazierfähige Sicherheitsetiketten in der Form von Kartonetiketten, die bspw. zum Etikettieren von Textilien verwendet werden, lassen sich herstellen, wenn die Trägerfolie aus Polyester besteht und wenn die Abdeckfolie auf beide Seiten des Ausgangsmaterials aufgebracht wird, wobei die auf das Metallband und auf die Trägerfolie geklebten Abdeckfolien aus zu bedruckendem Etikettenpapier bestehen.

Einige Ausführungsbeispiele der Erfindung werden im folgenden anhand der Figuren näher erläutert. Es zeigen
- Fig. 1: die Vorrichtung zur Herstellung von Sicher heitsetiketten unter Anwendung des erfindungsgemäßen Verfahrens und
- Fig. 2 bis Fig. 6: nach dem erfindungsgemäßen Verfahren hergestellte Etiketten im Schnitt.

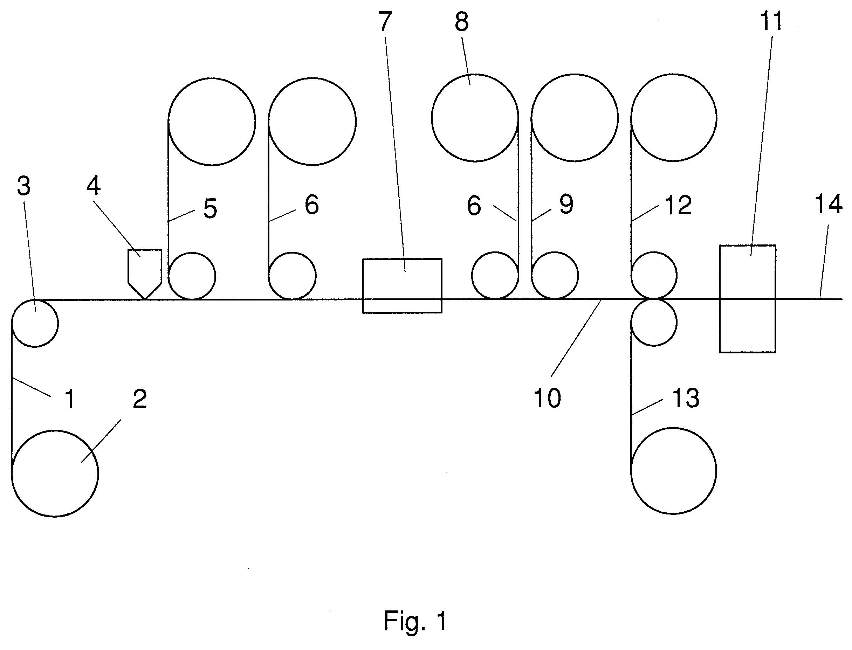

Wie in Fig. 1 dargestellt ist, wird zunächst Trägerfolie 1 von einer Vorratsrolle 2 abgewickelt und über eine Umlenkrolle 3 einer Beleimungsvorrichtung 4 zugeführt. Als Trägerfolie 1 kann sowohl Siliconpapier als auch unbeschichtetes Papier verwendet werden. Weiterhin kann als Trägerfolie 1 Kunststoffolie zum Einsatz kommen.

Mit Hilfe des von der Beleimungsvorrichtung 4 aufgetragenen Leimes wird auf die Trägerfolie 1 ein hartmagnetischer Metallstreifen 5 und darauf eine Siliconpapierschicht 6 geklebt. Der hartmagnetische Metallstreifen 5 besteht aus einem Metall, das durch eine relativ hohe Koerzitivfeldstärk H_{c} gekennzeichnet ist und somit ähnlich einem Dauermagneten magnetisch bleibt, wenn es von einem äußeren Magnetfeld magnetisiert wurde.

Das aus der Trägerfolie 1, dem Metallstreifen 5 und dem Siliconpapier 6 bestehende Schichtmaterial wird einer Lochstanze 7 zugeführt, die hieraus im Bereich des Metallstreifens 5 in regelmäßigen Abständen Löcher stanzt. Hierdurch wird erreicht, daß der Metallstreifen 5 in einzelne Stücke unterteilt wird, die in gleichen Abständen voneinander auf der Trägerfolie angeordnet sind.

Das Siliconpapier 6, dessen Aufgabe darin besteht, den Metallstreifen 5 auf der Trägerfolie 1 zu fixieren, so daß er beim Stanzen nicht seitlich verschoben wird, wird von der Trägerfolie 1 wieder abgelöst und auf eine Aufwickelrolle 8 gewickelt. Im Anschluß daran wird auf den hartmagnetischen und von der Lochstanze 7 mit Lücken versehenen Metallstreifen 5 ein weichmagnetisches Metallband 9 geklebt, das aus einem Metall mit einer niedrigen Koerzitivfeldstärke H_{c} besteht. Dies bewirkt, daß das Metallband 9 von einem äußeren magnetischen Wechselfeld leicht ummagnetisierbar ist, so daß es seinerseits ein magnetisches Wechselfeld abstrahlen kann, das von einem Empfänger erfaßbar ist.

Auf obige Weise wird ein aus der Trägerfolie 1, dem Metallstreifen 5 und dem Metallband 9 bestehendes Ausgangsmaterial 10 hergestellt, auf das Abdeckfolie 12, 13 aufgebracht wird, wonach das Ausgangsmaterial 10 zur Herstellung von Etiketten 14 einer Etikettenstanze 11 zugeführt wird. Wird als Trägerfolie 1 mit Silicon beschichtetes Papier verwendet, ist es ausreichend, Abdeckfolie 12 einseitig auf das Metallband 9 aufzubringen. Anderenfalls ist Abdeckfolie 12, 13 auf beide Seiten des Ausgangsmateials 10 aufzukleben, wobei auf der dem Metallband 9 abgewandten Seite vorteilhafterweise mit Silicon beschichtetes Papier aufgebracht wird, das auf Grund der Siliconschicht klebstoffabweisend ist und somit vom Ausgangsmaterial 10 leicht abgelöst werde kann. Auf diese Weise sind Etiketten 14 mit einer leicht ablösbaren Abdeckfolie herstellbar, die danach problemlos auf zu verkaufende Artikel geklebt werden können.

Auf das Metallband 9 kann als Abdeckfolie 12 bspw. mechanisch bedruckbares Etikettenpapier, temperaturempfindliches Etikettenpapier oder auch eine transparente Kunststoffolie aufgebracht werden. Die auf der dem Metallband 9 abgewandten Seite aufzuklebende Abdeckfolie 13 kann als mit Silicon beschichtetes Papier, als mechanisch bedruckbares Etikettenpapier oder als temperaturempfindliches Etikettenpapier ausgebildet sein.

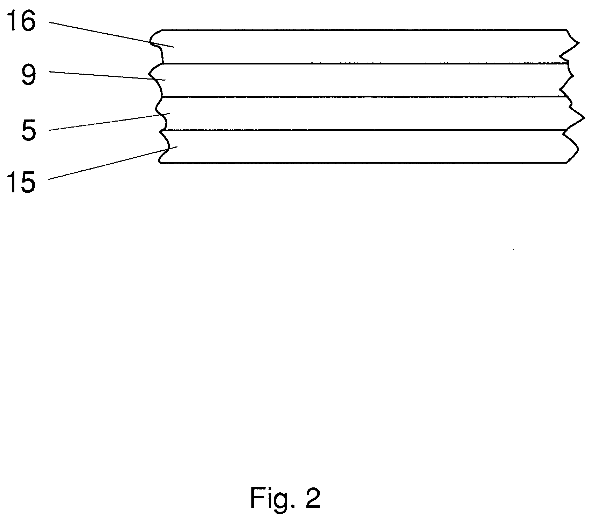

In den Figuren 2 bis 6 sind einige Beispiele von auf die erfindungsgemäße Weise herstellbaren Etiketten im Schnitt dargestellt. Bei dem in Fig. 2 dargestellten Etikett wird als Trägerfolie mit Silicon beschichtetes Papier 15 verwendet, worauf der hartmagnetische Metallstreifen 5 und das weichmagnetische Metallband 9 geklebt sind. Auf das hieraus bestehende Ausgangsmaterial ist einseitig eine aus herkömmlichem Etikettenpapier 16 bestehende Abdeckfolie aufgebracht. Derartige aus lediglich 4 Schichten bestehende Etiketten sind preisgünstig herstellbar.

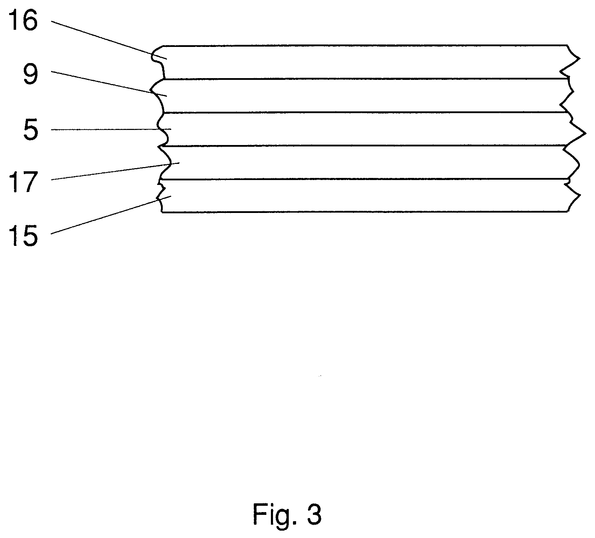

Bei dem in Fig. 3 dargestellten Ausführungsbeispiel wird als Trägerfolie unbeschichtetes Papier 17 verwendet, auf das der Metallstreifen 5 und das Metallband 9 geklebt sind. Auf dieses Ausgangsmaterial wird beidseitig Abdeckfolie aufgebracht, die auf der Seite, auf der sich das Metallband 9 befindet, als herkömmliches Etikettenpapier 16 und auf der dem Metallband 9 abgewandten Seite als mit Silicon beschichtetes Papier 15 ausgebildet ist.

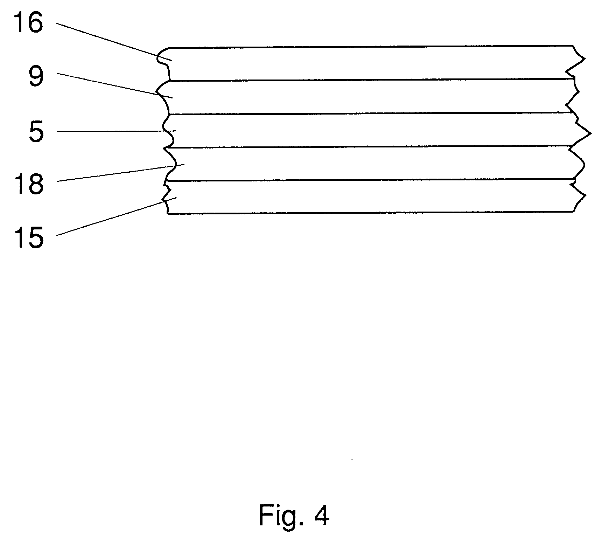

Hiervon unterscheidet sich das in Fig. 4 dargestellte Ausführungsbeispiel eines Etikettes dadurch, daß als Trägerfolie eine transparente Kunststoffolie 18 verwendet wird, die diesem auf herkömmliche Weise bedruckbaren Etikett eine größere Festigkeit verleiht.

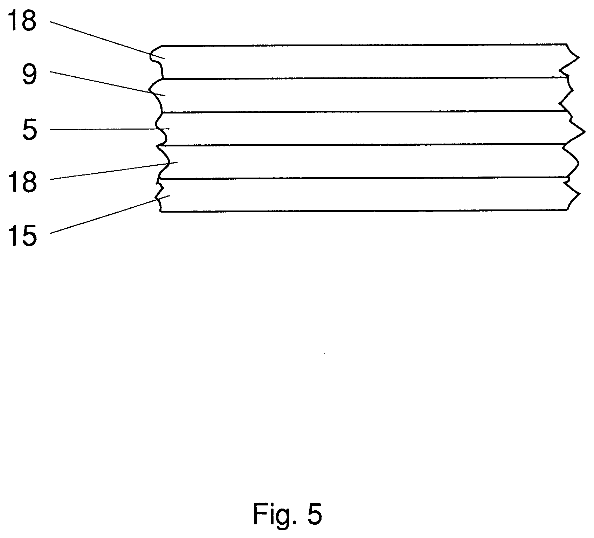

Bei dem in Fig. 5 skizzierten Etikett ist das herkömmliche Etikettenpapier 16 gemäß Fig. 4 durch eine transparente Kunststoffolie 18 ersetzt, wodurch ein Etikett entsteht, das nach dem Ablösen des mit Silicon beschichteten Papieres 15 und dem Aufbringen auf zu verkaufende Waren nur sehr schwer erkennbar ist.

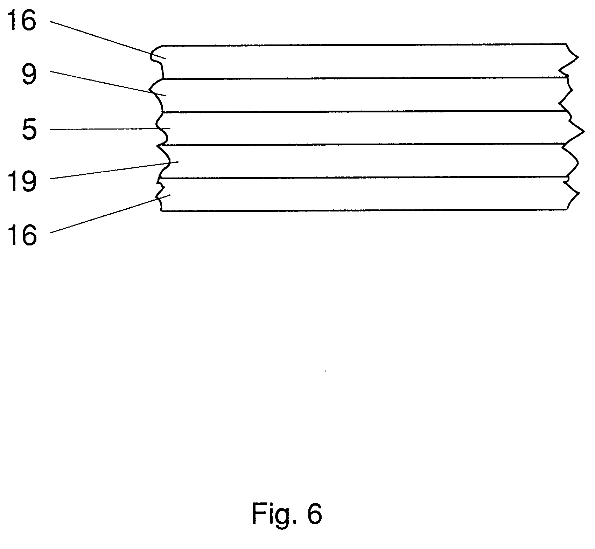

Bei dem in Fig. 6 dargestellten Etikett wird als Trägerfolie eine Polyesterfolie 19 verwendet, auf welcher der Metallstreifen 5 und das Metallband 9 angeordnet sind und auf der beidseitig Etikettenpapier 16 als Abdeckfolie aufgebracht ist. Ein auf diese Weise hergestelltes Etikett weist eine besondere Festigkeit und Steifigkeit auf, weshalb derartige Etiketten auch Kartonetiketten genannt werden.

## Patentansprüche

1. Verfahren zur Herstellung von Sicherheitsetiketten, bei dem
a) auf eine Trägerfolie (1) ein hartmagnetischer Metallstreifen (5) aufgeklebt wird,
b) auf den hartmagnetischen Metallstreifen (5) eine Siliconpapierschicht (6) aufgebracht wird,
c) die Trägerfolie (1) mit dem Metallstreifen (5) und der Siliconpapierschicht (6) einer Lochstanze (7) zugeführt wird, die hieraus im Bereich des Metallstreifens (5) in regelmäßigen Abständen Löcher herausstanzt;
d) die Siliconpapierschicht (6) von der Trägerfolie (1) abgezogen wird,
e) auf den hartmagnetischen und mit Lücken versehenen Metallstreifen (5) ein durchgehendes, weichmagnetisches Metallband (9) aufgeklebt wird,
f) auf mindestens eine Seite des aus der Trägerfolie (1), dem Metallstreifen (5) und dem Metallband (9) bestehenden Ausgangsmateriales (10) Abdeckfolie (12,13) aufgebracht wird und
g) aus dem mit Abdeckfolie (12,13) versehenen Ausgangsmaterial (10) Etiketten (14) gestanzt werden.

2. Verfahren zur Herstellung von Sicherheitsetiketten nach Anspruch 1, **dadurch gekennzeichnet,** daß die Trägerfolie (1) aus mit Silicon beschichtetem Papier (15) und die Abdeckfolie (12) aus zu bedruckendem Etikettenpapier (16) besteht, das auf das Metallband (9) geklebt wird.

3. Verfahren zur Herstellung von Sicherheitsetiketten nach Anspruch 1, **dadurch gekennzeichnet,** daß die Trägerfolie (1) aus unbeschichtetem Papier (17) besteht und daß die Abdeckfolie (12,13) auf beide Seiten des Ausgangsmaterials (10) aufgebracht wird, wobei die auf das Metallband (9) geklebte Abdeckfolie (12) aus zu bedruckendem Etikettenpapier (16) und die auf die Trägerfolie (1) geklebte Abdeckfolie (13) aus mit Silicon beschichtetem Papier (15) besteht.

4. Verfahren zur Herstellung von Sicherheitsetiketten nach Anspruch 1, **dadurch gekennzeichnet,** daß die Trägerfolie (1) aus Kunststoff (18) besteht und daß die Abdeckfolie (12,13) auf beide Seiten des Ausgangsmaterials (10) aufgebracht wird, wobei die auf das Metallband (9) geklebte Abdeckfolie (12) aus zu bedruckendem Etikettenpapier (16) und die auf die Trägerfolie (1) geklebte Abdeckfolie (13) aus mit Silicon beschichtetem Papier (15) besteht.

5. Verfahren zur Herstellung von Sicherheitsetiketten nach Anspruch 1, **dadurch gekennzeichnet,** daß die Trägerfolie (1) aus Kunststoff (18) besteht und daß die Abdeckfolie (12,13) auf beide Seiten des Ausgangsmateriales (10) aufgebracht wird, wobei die auf das Metallband (9) geklebte Abdeckfolie (12) aus Kunststoff (18) und die auf die Trägerfolie (1) geklebte Abdeckfolie (13) aus mit Silicon beschichtetem Papier (15) besteht.

6. Verfahren zur Herstellung von Sicherheitsetiketten nach Anspruch 1, **dadurch gekennzeichnet,** daß die Trägerfolie (1) aus Polyester (19) besteht und daß die Abdeckfolie (12,13) auf beide Seiten des Ausgangsmaterials (10) aufgebracht wird, wobei die auf das Metallband (9) und auf die Trägerfolie (1) geklebten Abdeckfolien (12,13) aus zu bedruckendem Etikettenpapier (16) bestehen.
